(19) Europäisches Patentamt
European Patent Office
Office européen des brevets

(11) Numéro de publication : **0 580 542 A1**

(12) **DEMANDE DE BREVET EUROPEEN**

(21) Numéro de dépôt : **93600013.2**

(51) Int. Cl.$^5$ : **H02P 9/42**

(22) Date de dépôt : **21.05.93**

(30) Priorité : **23.07.92 GR 92010033**

(43) Date de publication de la demande : **26.01.94 Bulletin 94/04**

(84) Etats contractants désignés : **DE DK ES FR GB IT NL PT SE**

(71) Demandeur : **SAMIAKOS, Spyros
M. Alexandrou 9
GR-151 22 Marousi, Athens (GR)**

(72) Inventeur : **SAMIAKOS, Spyros
M. Alexandrou 9
GR-151 22 Marousi, Athens (GR)**

(54) **Construction d'un onduleur photoélectronique capable de fournir une tension et une fréquence variables au rotor entortillé d'une génératrice asynchrone, pour des aérogénérateurs de tout type.**

(57) Le système proposé concerne l' alimentation du rotor d' une génératrice asynchrone à rotor entortillé par un ONDULEUR.
L' ONDULEUR fournit une tension alternative triphasée au rotor, de fréquence et tension variables.
La fréquence a une valeur telle que la génératrice produise toujours de la tension à la même fréquence que celle du réseau (50 Hz).
Le principe du fonctionnement du système, est la création des signes électriques d' allumage des transistors de puissance MOSFETs.
La création de ces signes est fondée au le balayage des photopiles par une zone lumineuse tournante, de fréquence égale à la différence de deux fréquence :
Fréquence du réseau - Fréquence de rotation du rotor
L' invention peut être appliquée aux aérogénérateurs de tous les types puisque le système peut alimenter le rotor, avec une tension triphasée alternative de fréquence complementaire pour une gamme de fréquence de rotation large.
L' invention peut être aussi appliquée à la conversion de l' énergie solaire à l' énergie éléctrique, c' est à dire à la conversion de tension continue à tension alternative triphasée avec des harmoniques négligeables.

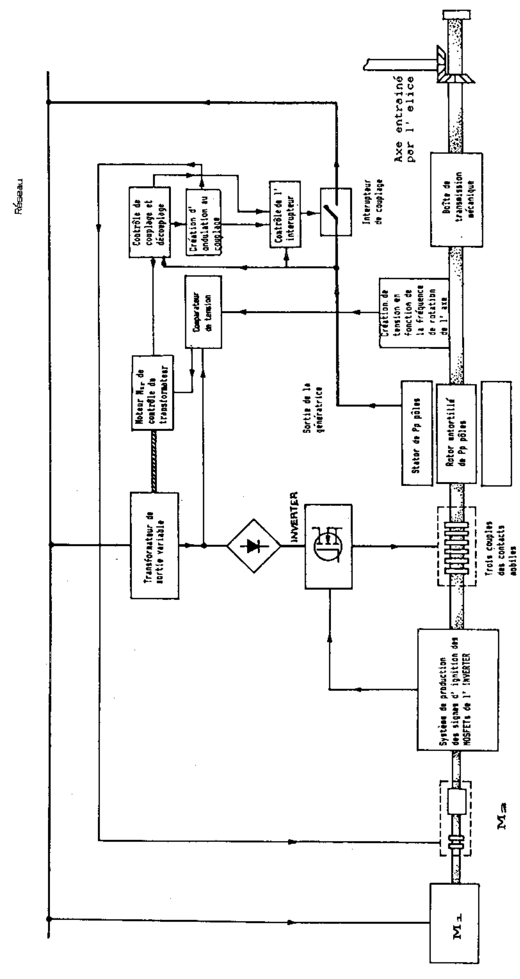

Fig. 2

EP 0 580 542 A1

Le brevet concerne la partie des aérogénérateurs éléctrologique et plus précisement l'excitation de la génératrice.

Le système proposé concerne la réalisation d'une génératrice synchrone flexible qui peut varier la fréquence de rotation sans le danger de désynchronisation.

Le partie éléctrologique des aérogénérateurs se constitue, habituellement, d'une génératrice asynchrone, dont la fréquence de rotation reste à peu près stable.

La stabilisation de la fréquence est obtenue à l' aide du contrôle mécanique du pas du pale de l'élice (pitch control), ou à l'aide du frein dans le cas de la vitesse du vent plus grande que la vitesse de fonctionnement nominale.

Mais cette stabilisation de la fréquence a lieu en detriment du rendement aérodynamique, et conséquemment une chute du rendement de l' ensemble de l' installation.

En plus, l' utilisation du frein mécanique, entraîne des ruptures et crée un besoin de maintenir assez fréquent.

Une autre méthode est l' exploitation du vent complete en suivant l' élice, la vitesse du vent.

Dans cette méthode on utilise une génératrice du courant continu, dont la tension (continue) est conversée à tension alternative, de fréquence égale à celle du réseau avec lequel est liée.

La conversion a lieu à l' aide du convertisseur éléctronique, INVERTER. La désavantage de la méthode est l' apparition de nombreuses harmoniques et le passage des courants forts par les transistors.

Une autre méthode, de la même catégorie, est l' utilisation des boîtes de vitesse compliquées et lourdes, afin que l' élice puisse varier la fréquence de rotation (suivant la vitesse du vent), mais avec la fréquence de rotation de la génératrice à peu près stable.

Dans le cadre de l' invention proposée, un convertisseur de courant continu à courant alternatif, alimente le rotor d' une génératrice asynchrone.

Le système de la production de tension alternative de fréquence variable, est fondé sur un INVERTER photoéléctronique, dont les transistors de puissance reçoivent des signes d' ignition, provenus par le balayage des photopiles par une zone tournante lumineuse.

L'INVERTER nous donne une fréquence telle qu' elle soit ajoutée sur la fréquence mécanique de rotation du rotor et qu'elle nous donne la fréquence du réseau (50 Hz ou 60 Hz), après être multipliée par le nombre des paires des pôles.

C' est à dire, dans tous les cas:

$(Ninv + N)*(P/2) = 50$ (ou 60 Hz) ou: Ninv est la fréquence que nous fournit l' INVERTER, N est la fréquence de rotation du rotor, et P/2 est le nombre des paires des pôles.

Le système photoéléctronique est constitué en quatre parties:

(A) La première partie se compose d' un petit moteur synchrone triphasé $M_1$, Figure 1., dont le nombre des pôles est égal à celui de la génératrice.

L' alimentation du moteur est assurée par le réseau, Fig. 1.

Le moteur entraîne en rotation, avec une fréquence égale à 50/(P/2)Hz, un disque (1), Figure 1., qui a une ouverture, Figure 3., via laquelle passe la lumière, qui est provenue par des lampes (3), Figure 1., qui se trouvent d' une part du disque (1).

Quand le disque tourne, la lumiere passe via l' ouverture et conséquemment une zone lumineusee tourne à droite du disque, avec une fréquence égale à 50/(P/2) Hz, et généralement:

(fréquence du réseau) / (Nombre des paires des pôles)

Le nombre des paires des pôles du moteur $M_1$, Fig. 1, est toujours égal à celui de la génératrice.

Le disque (1) hors de la rotation précédente primaire, peut se mettre en une rotation complementaire (de très petite fréquence), à l' aide d' un petit moteur $M_2$ qui est articulé, d' une manière solide, sur le même axe (4) qui entraîne le $M_1$, Fig. 1.

Cette rotation secondaire a lieu pour la création de l' ondulation de la tension aux bornes du stator (RMS) pendant la procédure du couplage de la génératrice avec le réseau.

Quand le moteur M2 fonctionne, la zone lumineuse tourne avec une fréquence un peu plus petite ou plus grande que 50/(P/2) Hz.

Mais le fonctionnement de $M_2$ s' arrête immediatement après le couplage.

(B) La deuxième partie se compose d' un disque (2) qui est entraîné par le même axe (18), qui entraîne la génératrice, Figure 1.

Le disque (2) a sur sa surface des photopiles sensibles (8), Fig. 6., qui sont balayées par la zone lumineuse qui pénètre l' ouverture du premier disque (1), Fig. 1. et Fig. 3.

Du fait que le sens de rotation de deux disques est le même, avec une fréquence différente, le resultat est que la zone lumineuse balaie le disque (2) avec une fréquence:

[ 50/(P/2) - N ] , ou 50/(P/2) est la fréquence de rotation du moteur synchrone $M_1$ (disque (1)) et N est la fréquence mécanique de rotation de la génératrice qui entraîne le disque (2), Fig. 2.

C' est à dire, les photopiles sensibles donnent leurs signes photoéléctriques (signes de tension) avec une fréquence égale à celle de la zone lumineuse qui les balaie.

Les tensions - signes des Photopiles après être amplifiées par les amplificateur operationnels conduisent les MOSFETs de l' INVERTER.

(C) Les amplificateurs operationnels (5), Fig. 1 et l' ensemble des MOSFETs de l' INVERTER (6) compose la troisiemme partie, Fig. 1 et Fig. 18.

A cause du fait que les signes amplifiés qui conduisent les MOSFETs, ont une fréquence égale à [ 50/(P/2) - N ] Hz , l' INVERTER fournit le rotor de la génératrice d' une tension de la même fréquence:

$$(100/P - N)\ Hz$$

Mais cette fréquence, 100/P - N, est la fréquence complementaire, puisque: (Ninv + N)(P/2) est la fréquence que le stator voit, ou Ninv = 100/P - N et en remplaçant: (100/P - N + N)*(P/2) = 50 Hz.

C' est à dire, la tension induite au stator à une fréquence de 50 Hz, donc, la génératrice fonctionne toujours, comme une génératrice synchrone.

(D) Un transformateur, qui a au secondaire des contacts intermediaires (9), Fig. 17, par lesquels on prend les tensions qui alimentent l' INVERTER après leur redressement, Figure 1. et Fig. 17.

Cette manière d' alimentation nous assure l' élimination des harmoniques.

La première Figure 1., concerne le principe de fonctionnement de l' INVERTER photoéléctronique, comme elle a été décrite en bref, précédemment.

Les details techniciens qui conservent la disposition des photopiles sur le deuxième disque et de même l' amplification des signes photoéléctriques qui conduisent les MOSFETs sont expliqués dans un paragraphe suivant.

Le système décrit de l' alimentation de la génératrice de type "double fed induction machine" peut être utilisé à tous les types des aérogénérateurs.

C' est à dire aux aérogénérateurs à axe orizontal et de même aux aérogénérateurs à axe vertical.

La philosophie est toujours la même:

L' élice suit librement les variations de la vitesse du vent et la fréquence de rotation sera stabilisée à manière que la condition d' égalite, entre le moment mécanique (à cause du vent) et le moment éléctromagnetique, soit satisfaite.

Jusqu' aujourd'hui la méthode habituelle est la stabilisation de la fréquence de rotation de l' élice, en detriment du rendement aérodynamique.

La nouveauté introduite, donc, est l' exploitation complete de la puissance du vent, dans une marge des vitesses du vent large.

L' idée principale est la même que la societé SIEMENS a appliqué au grand aérogénerateur GROWIAN:

"Siemens Power Engineering" Vol. VI No.1

January/February 1984

Pages 56 to 59

Author: Otto Warneko

La différence entre le système décrit et celui de SIEMENS est la manière de production de la tension alternative (INVERTER).

L' avantage du système que SIEMENS a utilisé est l' utilisation des transistors de puissance à l' alimentation du rotor de la génératrice en la rendant une génératrice synchrone.

Avec ce système, SIEMENS a obtenu la reduction des harmoniques et le passage des courants plus petits, via les transistors de puissance, (par rapport ceux-ci qui passeraient si la conversion auraient lieu au stator)

La nouveauté d' invention proposée est la manière differente de production de la tension alternative de fréquence complementaire.

Plus precisement, SIEMENS a utilisé un synchnomètre sensible lié avec un ordinateur pour l' ignition des transistors de l' INVERTER.

Dans l' invention proposée est utilisé un système photoéléctronique, qui simplifie le fonctionnement.

Mais hors de la simplification, on a une possibilité d' une marge du glissement du rotor large, par rapport à la fréquence du reseau 50 Hz.

En revanche, au système de SIEMENS, la marge de glissement est seulement 10% par rapport à une fréquence de rotation nominale.

L' invention proposée, est appliquée à un modele, tout à fait théorique de type DARRIEUS.

Le choix de ce type a eu lieu, parce que avec le système décrit, on élimine les deux désavantages des aéromoteurs de ce type.

Le premier est la chute du coefficient aérodynamique Cp si la fréquence de rotation reste stable et la vitesse du vent change.

Le deuxième est la variation du moment mécanique (exercé par le vent) pendant la periode d' une tour de l' élice, c' est à dire la variation de puissance fournie au reseau.
L' élimination de deux désavantages précédents, rend les aérogénérateurs DARRIEUS antagonistes par rapport à ceux à axe orizontal.
Le systeme décrit à l' etude a les avantages suivants:

A) A cause de la manière automatique du reglement de la fréquence de la tension que l' INVERTER fournit au rotor, la génératrice travaille toujours comme une génératrice synchrone sans le danger de désynchronisation.

Il s' agit, c' est à dire, d' une génératrice asynchrone flexible qui peut poursuivre la vitesse du vent (et le moment exercé par le vent), avec une variation de fréquence de rotation libre.

Par rapport à la génératrice synchrone classique une autre différence est l' inexistence d' une fermeture à clef magnétique, (magnetic locking), à une fréquence de rotation.

Ce dernier rend la génératrice instable (flottante) en ce qui concerne la fréquence de rotation.

Mais cette instabilité, est exactement ce qu' on demande.

Ce dernier devient clair si on regarde le modèle vectoriel de la génératrice synchrone.

Si on suppose qu' il y a une augmentation du moment mécanique sur l' axe, on a aussi en même temps un déplacement de l' angle mécanique du rotor.

Mais ce déplacement mécanique n' est pas traduit à un déplacement en avance du champs magnétique tournant, parce que chaque déplacement en avance du disque avec les photopiles (qui est entraîné en rotation par le même axe), a comme resultat le retard respectif temporel à l' ignition des transistors MOSFETs.

Ce dernier a comme resultat, que chaque déplacement mécanique du rotor soit annulé, par un déplacement contraire au champs magné, tique, crée par la tension triphasée fournie par l' INVERTER.

Conséquemment l' angle entre le flux resultant magnétique d' entrefer $\Phi_{sr}$ et le flux magnétique du rotor $\Phi_r$ reste le même, si le courant du rotor Ir ne change pas.

Mais ce dernier signifie, que la puissance fournie (par la génératrice) reste stable et de même le moment éléctromagnétique.

Le resultat est l' accéleration du rotor et l' augmentation de la fréquence de rotation.

Contrairement, à la génératice synchrone classique, une petite déplassement en avance du rotor (un angle $\Delta\varphi$ ), a comme resultat l' augmentation de la puissance fournie et de même du moment éléctromagnétique qui contrabalance l' augmentation du moment mécanique à manière que la fréquence de rotation reste stable.

C' est à dire le comportement est different.

Plus précisement, dans le cas du système décrit on a une conservation de la puissance fournie et du moment éléctromagnétique, qui a comme resultat l'accéleration du rotor.

Mais à cause du fait que le rotor avec tout le système de l' élice a une grande moment d' inertie, l' accéleration est douce suivant les lois classiques de la Mécanique.

Et si le moment mécanique, (exercé par le vent), presente une ondulation (ce qui est une realité à l'aeromoteur DARRIEUS), cette ondulation provoque une ondulation degradé de la puissance fournie.

C' est à dire au système proposé, l' inertie mécanique est traduite en une inertie de la puissance électrique fournie.

Le deuxième desavantage des aeromoteurs DARRIEUS est donc, annulé (à cause de la degradation de l' ondulation de la puissance éléctrique fournie.

Mais si l' augmentation de moment mécanique sur l' axe est permanente le resultat est l' accéleration du rotor.

Dans ce cas la fréquence de rotation augmente et le glissement du rotor baisse.

Cette reduction du glissement, entraîne la réduction de la réactance du rotor et de même la réduction de la tension induite aux circuits du rotor.

A cause de la réduction de la rèactance et de la tension induite (qui est opposée à celle que l' INVERTER impose), il y a une augmentation du courant Ir du rotor.

Ces variations à la réactance, au glissement et à la tension induite, ont comme resultat le changement de tout le diagramme vectoriel, qui est respectif maintenant à une situation nouvelle, ou nous avons des courants au stator et au rotor plus grands.

Dans cette situation nouvel

Toute la simplification précédente du fonctionnement de la génératrice, a lieu, grâce à la manière "naturelle" de changement de la fréquence d' ignition des MOSFETs de l' INVERTER, à cause de mouvement relatif de deux disques tournants.

B) Le deuxième avantage du système proposé, est l' élimination des harmoniques à cause de l' application de la tension a l' INVERTER en trois pas, comme il est expliqué au chapitre respectif.

C' est à dire la forme du flux magnétique du rotor est presque sinusoidal.

C) Le troisième avantage est resultat du précédent, et concerne la construction de la génératrice.

A cause du fait que la forme du champs magnétique du rotor est presque sinusoidale, le bobinage du stator peut être concentré et les dimensions de l' entrefer les plus moins possible, reduisant le courant du rotor demandé (pour l' excitation).

Cette reduction rend la construction de la génératrice plus économique, comme aussi celle de l' INVERTER, puisque le nombre des MOSFETs paralleles demandés baisse.

D) Le quatrième avantage concerne le couplage et le découplage de la génératrice avec le reseau.

Un problème qui fait apparition pendant le couplage et le découplage, est la perturbation entrainée au réseau, par les génératrices asynchrones des aérogénérateurs.

Au système proposé, le couplage et le découplage a lieu doucement comme aux génératrices synchrones.

Seulement au cas d' une situation irregulière le découplage a lieu brusquement.

Ces cas sont: la supertension, le supercourant, la manque de phase.

L' invention deviendra plus claire avec une référence aux dessins qui accompagnent les textes, et ils présentent sa réalisation.

A la Fig. 1, nous avons une présentation qui concerne le principe du fonctionnement de l' INVERTER phtoéléctronique.

A la Fig. 2, nous avons une présentation du foncionnement du système éléctrique d' un aérogénérateur qui utilise l' invention proposée.

A la Fig. 3, nous avons une présentation du disque (1) avec les secteurs respectifs de son ouverture.

A la Fig. 4, nous avons une section du disque (1) de la Fig. 3.

A la Fig. 5a, nous avons une présentation de l' INVERTER classique qui nous fournit une tension de la forme du méandre.

A la Fig. 5b, nous avons une présentation de l' INVERTER proposé à l' invention, qui nous fournit une tension presentée à la Fig. 5c.

A la Fig. 5c, nous avons une présentation de la forme de la tension, que l' INVERTER proposé (Fig. 5b) nous fournit, de 0 à T/2 où T est la periode.

A la Fig. 6, nous avons la disposition convenable des photopiles sur la surface du disque (2).

A la Fig. 7a, nous avons une section du disque (1), où sont presentées la base et les "trous" dans lesquelles les photopiles sont implantées.

A la Fig. 7b, nous avons une section du disque (2), ou sont presentées toutes les trois parties du disque (2), c' est à dire, la base, la surface d' implantation des photopiles et la couverture transparante.

A la Fig. 8 est présenté l' aspect d' une photopile.

A la Fig. 9 est présenté la manière de balayage des photopiles du disque (2) par la zone lumineuse tournante.

Aux Figures 10, 11, 12, 13, 14 sont présentés quelques instants charactérestiques du balayage du disque (2) par la zone lunineuse.

A la Fig. 15 est presenté un profil de l' axe (18) qui tourne le disque (2) où on peut voir les sillons et les cables qui coduisent les signes par les photopiles aux anneaux (7).

A la Fig. 16, sont presentés le fonctionnement des amplificateurs operationnels, l' alimentation du rotor et la liaison de deux axes, (axe de la génératrice et axe en bois (18).

A la Fig. 17, est presenté le transformateur à sortie variable, avec le contacts intermediaires (9) et le circuit de redressement de trois tensions prises.

A la Fig. 18, est presenté l' INVERTER qui alimente la phase A' du rotor de la génératrice.

Un problème qui fait apparition à la conversion du courant continu à courant alternatif, est le problème des harmoniques.

Si nous supposons une installation des aérogénérateurs massive à l' utilisation d' INVERTER, le problème de reduction des harmoniques a une importance décisive.

Dans ce but l' INVERTER fournit une tension qui est developée en trois pas, comme il est presenté dans le schéma qui suit:

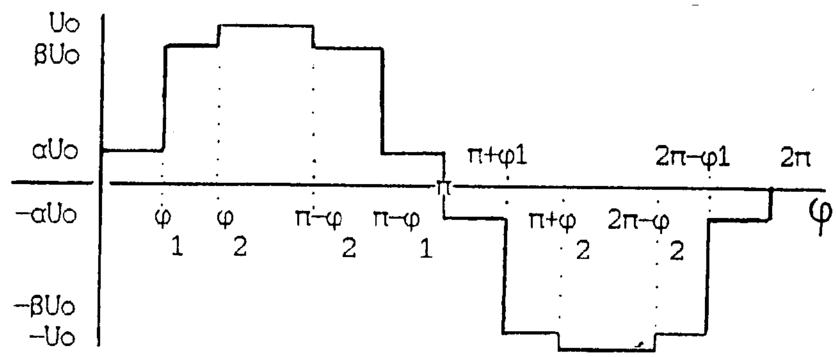


Par la forme de la courbe précédente et la Fig, 5b., on a le tableau de fonctionnement des MOSFETs, qui concerne la durée angulaire pendant laquelle sont "ouverts".

**TABLEAU 1.**

| DUREE | MOSFET OUVERT | |
|---|---|---|
| 0 − φ1: | 1 | , −1 |
| φ1 − φ2: | 1,1' | , −1 |
| φ2 − (π−φ2): | 1,1',1", | −1 |
| (π−φ2)−(π−φ1): | 1,1' | , −1 |
| (π−φ1) − π: | 1 | , −1 |
| π − (π+φ1): | 1τ | , −1τ |
| (π+φ1)−(π+φ2): | 1τ,1τ' | , −1τ |
| (π+φ2)−(2π−φ2): | 1τ,1τ',1τ" | , −1τ |
| (2π−φ2)−(2π−φ1): | 1τ,1τ' | , −1τ |
| (2π−φ1) − 2π: | 1τ | , −1τ |

L' analyse qui suit a comme but, la demande des valeurs des $\varphi_1$, $\varphi_2$ et a, b , les plus convenables possibles, pour que les harmoniques:

2me, 4Gme, 5me etc soient petites.

Dans tous les cas les harmoniques 3me, 6me, 9me, 12me, etc ne circulent pas dans le circuit magnétique, du stator ou du rotor.

Selon la théorie de l' analyse FOURIER il est connu que pour une fonction periodique F(t) nous avons:

$$a_n = \frac{2}{T}\int_0^T F(t)\cos(n\omega t)\,dt \quad , \quad b_n = \frac{2}{T}\int_0^T F(t)\sin(n\omega t)\,dt \quad , \quad a_o = \frac{1}{T}\int_0^T F(t)\,dt$$

et la fonction peut être écrite:

$$F(t) = a_o + a_1 \cos\omega t + b_1 \sin\omega t + a_2 \cos 2\omega t + b_2 \sin 2\omega t + \ldots + a_n \cos n\omega t + b_n \sin(n\omega t)$$

De plus il est connu que si:
$F(t) = F(-t)$ (fonction paire)
$b_1=b_2=b_3 =....= b_n = 0$ et si:
$F(-t) = -F(t)$ (fonction impaire)
$a_1=a_2=a_3=....a_n = 0$ et $a_o = 0$

Par la forme de la courbe précédente nous concluons que:

$F(-\varphi) = -F(\varphi) = -\alpha Uo$ et concequemment:

1) $a_o = 0$ ( il n' y a pas de terme constant)

2) $a_1 = a_2 = a_3 = ...a_n = 0$ (il n' a pas de cosinusoidaux)

Ils existent donc, seulement des termes sinoisodaux $b_n$ dont l' expression nous devons trouver:

$$b_n = \frac{2}{T}\int_0^T F(t)\sin(n\omega t) = \frac{2}{T}\left[\int_0^{\varphi1/\omega} aUo\,\sin(n\omega\tau) + \int_{\varphi1/\omega}^{\varphi2/\omega} bUo\,\sin(n\omega t) + \int_{\varphi2/\omega}^{(\pi-\varphi2)/\omega} Uo\,\sin(n\omega t) + \right.$$

$$+ \int_{(\pi-\varphi2)/\omega}^{(\pi-\varphi1)/\omega} bUo\,\sin(n\omega t) + \int_{(\pi-\varphi1)/\omega}^{\pi/\omega} aUo\,\sin(n\omega t) + \int_{\pi/\omega}^{(\pi+\varphi1)/\omega} (-aUo)\,\sin(n\omega\tau) + \int_{(\pi+\varphi1)/\omega}^{(\pi+\varphi2)/\omega} (-bUo)\,\sin(n\omega t) +$$

$$\left. + \int_{(\pi+\varphi2)/\omega}^{(2\pi-\varphi2)/\omega} (-Uo)\sin(n\omega t) + \int_{(2\pi-\varphi2)/\omega}^{(2\pi-\varphi1)/\omega} (-bUo)\sin(n\omega t) + \int_{(2\pi-\varphi1)/\omega}^{2\pi/\omega} (-aUo)\sin(n\omega t)\right] = \ldots\ldots\ldots$$

=.....et après les calculs:

$$= \frac{2Uo}{n T\omega}\left[2a(1-\cos n\pi) + a\cos n\varphi_1(2\cos n\pi-2) + b\cos n\varphi_2(2\cos n\pi-2) + + b\cos n\varphi_1(2-2\cos n\pi) + \cos n\varphi_2(2-2\cos n\pi)\right]$$

L' expression précédente nous fournit les termes $b_n$.
Nous examinons si il y a toute la serie des termes $b_n$.

Si n = 2k :

$$2a(1 - 1) + a\cos n\varphi_1(2 - 2) + b\cos n\varphi_1(2 - 2) + b\cos n\varphi_2(2 - 2) + \cos n\varphi_2(2 - 2) = 0$$

c' est à dire il n' y a pas des harmoniques paires

Si n = 2k + 1:

$$2a(1 + 1) + a\cos n\varphi_1(- 2 - 2) + b\cos n\varphi_1(2 + 2) + b\cos n\varphi_2(- 2 - 2) + + \cos n\varphi_2(2 + 2) = 4a - 4a\cos n\varphi_1 + 4b\cos n\varphi_2 + 4\cos n\varphi_2$$

Il y a, donc, seulement la serie des harmoniques impaires, et si on remplace:

$$b_n = U_o * (1/\eta\pi) * [4a(1 - \cos n\varphi_1) + 4b(\cos n\varphi_1 - \cos n\varphi_2) + 4\cos n\varphi_2]$$

On adopte, pour des raisons de symetrie $\varphi_1 = \pi/6$, $\varphi_2 = \pi/3$ et on doit calculer les valeurs des a , b de manière que les harmoniques basses soient reduites.

A cause du fait que les Harmoniques $3^{me}$, $9^{me}$, $15^{me}$ etc ne donnent pas de flux magnétique, on doit éliminer l' harmonique $5^{me}$.

Remplaçant les valeurs adoptées des angles et si on met:

$$b_5 = 0$$

on calcule:

$$b = \frac{a(2 + \sqrt{3}) + 1}{1 + \sqrt{3}}$$

On donne des valeurs arbitraires au pourcentage a, et en utilisant la relation précédente, on calcule la valeur de b.

On crée, donc, un tableau de paires (a , b) et pour chaque paire on calcule, à l' aide d' un petit programme, tous les harmoniques jusque au $31^{me}$.

Entre les paires, on peut adopter ce qui nous donne une valeur pour la première harmonique, presqu' égale à celle de la tension continue maximale appliquée Uo.

Les paires (a , b) sont:

(0.10 , 0.502) , (0.15 , 0,570) , (0.2 , 0.639) , (0.25 , 0.707)

(0.30 , 0.775) , (0.35 , 0.844) , (0.4 , 0.912) , (0.45 , 0.980)

Nous mettons ces valeurs au programme de calcule des harmoniques, et on compare les resultats.

On observe que le paire (0.25 , 0.707) nous donne $b_1 = 1.00875U_o$

On adopte, donc, ce paire et nous examinons plus précisement les valeurs de (a , b).

Essayant, enfin, les valeurs de a, qui sont près de 0.25, on observe que pour a = 0.24 , b = 0.693 et $b_1 = 1.000929*U_o$

Entre les harmoniques, jusqu' au $31^{me}$, on tient compte seulement de ceux qui créent du flux magnétique tournant, c' est à dire on ignore les harmoniques $3^{me}$, $9^{me}$, $15^{me}$, etc.

Ignorant, donc, les $b_3$ , $b_9$ , $b_{15}$ , $b_{21}$ , $b_{27}$ on a:

| | | |
|---|---|---|
| $b_1 = 1.00092U_o$ | $b_5 = 0$ | $b_7 = 0$ |
| $b_{11} = 0.0909U_o$ | $b_{13} = 0.0769U_o$ | $b_{17} = 0$ |
| $b_{19} = 0$ | $b_{23} = 0.0435U_o$ | $b_{25} = 0.0400U_o$ |
| $b_{29} = 0$ | $b_{31} = 0$ | |

On peut donc, rediger un programme pour l' ordinateur dans lequel on tiendra compte de tous les harmoniques jusqu' au $31^{me}$, exepté les $3^{me}$, $6^{me}$, $9^{me}$,...,$27^{me}$ comme il est deja expliqué précedement.

Les harmoniques de la tension qui sont superieurs du $31^{me}$ donnent respectivement des harmoniques de courant très petites puisque la réactance du rotor augmente avec la fréquence.

Dans ce cadre nous supposons une valeur de résistance homique et d' auto-inductance d' une phase du rotor: R = 0.5 Ohm et L = 0.8 H et nous dessinons la forme de la courbe du courant qui circule au rotor, en tenant le circuit du stator ouvert (Is = 0).

Pour chaque harmonique de la tension $b_1$, $b_5$, $b_7$,...,$b_{31}$ nous avons respectivement les courants $I_1$,$I_5$,...,$I_{31}$ dont l' amplitude est en fonction non seulement de l' amplitude des harmoniques de la tension $b_1$, $b_5$,....,$b_{31}$ mais en plus de l' impendance du rotor qui augmente avec la fréquence.

Enfin la différence de la phase angulaire entre tension - courant augmente avec la fréquence puisque le:

$$\tan\varphi = \eta(L\omega/R)$$

ou n = la classe de l' harmonique et $\omega$ = la pulsation de la première harmonique.

Dans tous le cas pour chaque harmonique du courant on a:

$$In = \frac{b_n}{SQR(R^2 + (nL\omega/R)^2)} \sin(n\omega t + \varphi)$$

où $\tan\varphi = \eta(L\omega/R)$

Par la forme de la courbe c' est visible que le courant équivalent (sans les $3^{me}$, $6^{me}$,..., $27^{me}$ harmoniques) est presque sinusoidal idéal).

Les tensions intermediaires $0.24U_o$ , $0.693U_o$ nous les prenons par le sécondaire du transformateur par des spires intermediaires.

Par exemple, si le sécondaire du transformateur à sortie variable, a 1000 spires, nous prenons la tension $0.24U_o$ par le $240^{me}$ spire et la tension $0.693U_o$ par le $693^{me}$spire.

D' après les valeurs précédentes la forme de la tension fournie à la sortie de l' INVERTER est presentée à la Fig. 5c.

Dans le paragraphe précédent, a eu lieu la description de la méthode mathématique de l' élimination des harmoniques.

Dans le paragraphe suivant on pourra voir la manière par laquelle les MOSFETs "ouvrent" et "eteignent" periodiquement.

Le principe général, de la production de tension alternative par les deux disques qui tournent dans le même sens mais avec de la vitesse différente, est déjà décrite.

Nous verrons maintenant les details de construction de deux disques:

A) Le premier disque qui est entraîné par le moteur $M_1$, Figure 1., a une ouverture comme c' est visible dans la Figure 3.

Le disque est composé de deux surfaces exactement pareilles, Fig. 3., qui sont liées par une zone (15) à la peripherie et avec une autre . au centre (16), comme c' est visible a la Figure 4., qui présente une section le long de la ligne à tirets de la Figure 3.

L' ouverture (la crevasse) du disque (1) peut être considerée qu' elle est divisée en trois secteurs, .Figure 3.

Le premier secteur (secteur 1.) est responsable de l' ignition des MOSFETs (1, -1) et (1r, -1r), Figure 5b , pour la phase A' du rotor et de même pour (2, -2) (2r, -2r) et (3, -3) , (3r, -3r) quant' aux phases B' , C' du rotor respectivement, Fig. 3 et Fig. 6 Le deuxième secteur (secteur 2) est responsable de l' ignition des MOSFETs: (1', 1'r) , (2, 2'r) , (3, 3'r) pour les phases A', B', C' du rotor respectivement, Fig. 3 , Fig. 5b et Fig. 6.

Le troisième secteur (secteur 3) est responsable de l' ignition des MOSFETs: (1", 1"r) , (2", 2"r) , (3", 3"r) pour les phases A', B', C' du rotor respectivement, Fig. 3 , Fig. 5b , Fig. 6.

Les dimensions des secteurs 1, 2, 3 nous assurent que la durée temporelle, pendant laquelle les MOSFETs sont ouverts, est celle qui a été décrite au paragraphe respectif (de l' analyse Fourrier), (Tableau I.).

Plus précisement le secteur 1 garde ouverts les MOSFETs: (1,-1) , (1r,-1r) , (2,-2),(2r,-2r) , (3,-3),(3r,-3r) pendant un demi tour, (angle 180°), ou durant le temps T/2 , ou T = la période de la rotation de la zone lumineuse qui balaie le disque (2), Figure 1 , Figure 3., Figure 6.

Le secteur 2 garde ouverts les MOSFETs: (1',1'r) , (2',2'r) , (3',3'r) pendant l' angle 120° ou durant le temps T/3, Fig. 3., 5b et 6.

Le secteur 3 garde les MOSFETs (1",1"r) , (2",2"r) , (3",3"r) ouverts pendant l' angle 60° ou durant le temps T/6.

Les deux disques tournants sont tout près, ou autrement dire l' écart entre eux, est très petit, afin que la lumière qui balaie les photopiles soit cette qui est definie par les secteurs le l' ouverture du disque (1), Fig. 3.

B) La diposition des photopiles sur le deuxième disque (2), Fig. 1. est visible dans la Fig. 6.

Le disque (2) est un ensemble de trois disques collés, Fig. 7b., de rayon égale.

Le premier (10), Fig. 7a., est un disque complet jouant le rôle de la base.

Le deuxième (11), Figyre 7a., qui est collé sur le précédent, a des "trous" (12) dont les dimensions sont égales à celles des photopiles. Dans ces trous sont "implantées" les photopiles (8), Fig. 8 et Fig. 6, afin que les photopiles puissent resister contre les forces centrifuses.

Les photopiles sont de la société Fransaise SOLEMS de type:

07/048/032, qui ont la surface photosensible sur une base en verre, et elles sont capables à subir des mouvements circulaires, sans aucun problème.

Enfin le troisième, dont le materiel est un plastique transparant, (13), Fig 7b., maintient les photopiles immobiles dans les trous. Une section, avec tous les trois disques collés, est la Fig. 7b.

Les trois disques se gardent collés à l' aide des vis de serrage (14) comme on peut le voir dans la Fig. 7b.

La disposition, selon laquelle a lieu la mise en place des photopiles, (ou les trous du deuxieme disque (11) ), est claire à la Fig. 6.

Les series des photopiles le long des diamètres ont un déplacement angulaire egal a 120°, ce qui est indispensable pour la création de la différence de 120°, comme la production de la tension triphasée exise.
On observe dans la Figure 6., que les photopiles (-1,1,1' ,1"), qui correspondent aux MOSFETs respectifs, Figure 18., sont placées à droite d' une rayon, et les photopiles (-1r,1r,1'r,1"r) à gauche de la rayon opposée (le même diamètre).
De même pour les photopiles (-2,2,2',2") , (-2r,2r,2'r,2"r) et (-3,3,3',3") , (-3r,3r,3'r,3"r).
Cette disposition est indispensable parce qu' au moment où le photopiles (-1r,1r,1'r,1"r) commencent à être balayées par la lumière, les photopiles (-1,1,1' ,1") doivent commencer à être non balayées, ou commencent à être dans l' obscurité.

Plus précisement chaque photopile a sept bandes, Fig. 8.
Les sept bandes sont liées en serie, donc, si la dernière (septième) bande se trouve dans l' obscurité, elle ne donne pas de tension et conséquemment la tension totale aux bornes A, B devient nulle.
C' est la raison pour laquelle l' ouverture du disque (1), Fig. 3 , n' est pas symétrique quant' à son contour.
Dans les Figures 9., 10., 11., 12., 13., 14., est presentée très clairement, la manière de balayage du disque (2) par la zone lumineuse.
Dans la Figure 9., on observe à la fois, le moment où l' ignition de (1r , -1r) a lieu, et ou les (-1, 1) eteignent.

Le signes éléctriques des photopiles balayées par la lumière, se conduisent, via des cables fins (17), Fig 15., aux anneaux (7), Fig 1., qui se trouvent à l' axe (18) qui tourne le disque (2).
L' axe (18), qui est construit en bois, a des sillons, dans lesquels se trouvent les cables fins qui conduisent les signes éléctriques des photopiles.
Une section de l' axe en bois on peut observer à la Figyre 15.
L' axe en bois est un prolongement de l' axe métallique de la génératrice.
Dans la Figure 16., on peut voir la liaison (19) de deux axes (l' axe métalique et l' axe en bois), et de même le degré d' amplification, qui a été prise égal à 5, et l' alimentation des amplificateurs operationnels.
L' amplification des signes des photopiles par 5, est rélativement petite, mais suffisante, afin que les amplificateurs operationnels se conduisent à la saturation, et en même temps nous assure par le "bruit" éléctronique.
Un convertisseur, qui converse le courant continu au courant alternatif (INVERTER), doit pouvoir varier la fréquence fournie et de même la tension fournie, d' après les besoins du fonctionnement de l' installation, c' est à dire de l' aérogénérateur.
Au paragraphe précédent, a été expliqué précisement, la manière de production de la fréquence complementaire, par la vitesse de rotation rélative de deux disques (1) et (2), Fig. 2.

Ce qui reste est la description de la manière de variation de la tension fournie par l' INVERTER.
La tension que l' INVERTER fournit, est definie par la tension de son alimentation. Il suffit conséquemment le contrôle de la tension au primaire du transformateur qui alimente l' INVERTER.
La méthode habituelle est le contrôle des instants d' ignition des transistors de puissance (Tyiristors ou Mosfets) à l' aide d' ordinateur. L' avantage de la méthode est la grande vitesse de variation de la tension.
Le désavantage est l' apparition de nombreuses harmoniques.

Dans l' invention proposée est utilisé un transformateur à sortie variable sans l' utilisation de transistors de puissance au primaire.
Afin qu' on obtienne cette variation de la tension, on utilise un transformateur dont le noyau, à la capacité du contrôle de flux magnétique.
Ce contrôle de flux magnétique peut être obtenu par la rotation d' une partie du noyau du transformateur à son centre, comme c' est visible très clairement dans la Fig. 17.

Si R est la rayon de la partie rotative (R = OA = OH), Fig. 17., et

si: $OD = DF = FG = GO$ et $DE = 4R$

on deduit: $DE = GH = 4R$ et $DF = FG = 4R + R = 5R$

Le dessin du transformateur a eu lieu en tenant compte le besoin que la résistance magnétique (relunctance) du noyeau soit la plus stable possible, durant la rotation de sa partie rotative.
C' est la raison pour laquelle il y a trois branches.
L' aire d' une section de la branche (22) est une fraction de l' aire de la section de la branche (23), Fig. 17.
L' aire du section de la branche (21) est égal à celui de la branche (23). Cette différence (de deux aires) assure le plus d' égalite possible de deux résistances magnétiques via les trajets:
(A B C D E) et (A B C D F G H), puisque il y a la partie commune (A B C D), donc il y a le besoin de l' égalite de la reluctance (résistance magnétique) des trajets (D E) et (D F G H).
Ce besoin est satisfait si: $DE/S_2 = ( DF + FG + GH ) /S_3$ où:
DE , ( DF + FG + GH ) sont les longeur de deux trajets (D E) et (D F G H), et $S_2$ , $S_3$ sont les aires des branches (2) et (3).
En tenant compte que $DF = FG = 5R$ et $DE = GH = 4R$ on calcule:

$4R/S_2 = ( 5R + 5R + 4R )/S_3$ et finalement:

$$S_2 = (2/7)\ S_3$$

La necessité du maintien de la résistance magnétique la plus stable possible, existe afin qu' on évite les moments forts pendant la rotation de la partie centrale.

Dans la Figure 17. on peut voir aussi les spires intermediaires qui nous donnent les tensions intermediaires $0.24U_o$ , $0.693U_o$.

Les trois tensions, prises au sécondaire, sont redressées comme c' est visible a la Fig. 1. et à la Fig. 17., et elles alimentent l' INVERTER, c' est à dire les trois IINVERTERs, dont chacun alimente une de trois phases du rotor, via d' un paire des anneaux, Fig. 16.

A la Fig. 1. et a la Fig. 17., on peut voir le premier INVERTER qui alimente la phase A' du rotor.

Les autre deux sont une répétition de la Fig. 17. de 2x4 = 8 MOSFETs

Les vecteurs a la Fig. 17. (à gauche des lignes), présentent les sens des courants redressés.

A la Fig. 1. et a la Fig. 17. sont absents les diodes de protection des MOSFETs de l' INVERTER pour des raisons de facilité du dessin.

La manière de liaison des diodes de protection (Transient Suprpressor) est visible au bas et à droite à la Fig. 17.

Les charactérestiques des MOSFETs et des diodes de protection sont choisis d' après nos besoins.

Le decisif au choix est la tension que les MOSFETs doivent "bloquer".

Ensuite nous calculons le nombre des MOSFETs que nous devons lier parallelement d' après le courant maximum.

Si par exemple la tension maximale qui doit être bloquée est 190 Volt (RMS) ou 266 Volt (valeur de pointe), on peut choisir le TMOS MTM15N35 de la societé MOTOROLA, avec des charactérestiques 350 V, 15 A.

Et si le courant maximum est 130 A (continu) on doit lier parallelement 9 transistors de ce type, à la place de chacun de la Fig. 17., c' est à dire 9x8 = 72 MOSFETs.

La partie rotative du transformateur à sortie variable, tourne a gauche ou à droite à l' aide d' un moteur de courant continue et via d' un système de dégradation de la fréquence de rotation en engrenages. La rotation est lente, mais sans qu' il y ait de problème pour l' application décrite.

Ce dernier est expliqué au paragraphe qui conserne les avantages, où on peut voir que les variations des grandeurs, qui concernent le fonctionnement de la génératrice, sont lentes à cause de l' inertie du système.

Le moteur du contrôle de la tension fournie par le transformateur, $M_{tr}$, reçoit des ordres de commande pour une rotation à gauche ou à droite par un comparateur de tension, Fig 2.

Le comparateur, compare une tension de référence, en fonction de la fréquence de rotation de l' axe de la géneratrice, avec la tension (une fraction) que le sécondaire du transformateur nous fournit, Fig 2.

Les details qui concernent le contrôle automatique d' une aérogénérateur qui utilise l' INVERTER photoélécronique décrit, se constituent l' objet d' un autre autre brevet acompagne par un modèle théorique (simulation) d' un aérogénérateur à axe vertical de type DARRIEUS.

A la Fig. 2 est présenté élementaraiment ce contrôle.

En général, le système proposé, simplifie le fonctionnement de l' aérogénérateur, puisque la frequence de l' INVERTER est contrôlée "naturellement" et automatiquement par la vitesse de rotation rélative de deux disques (1) et (2) , Fig. 1 , Fig. 3 , Fig. 6 et la tension fournie est contrôlée par un comparateur de tension qui exerce le contrôle du moteur $M_1$.

On doit noter que la description de l' invention a eu lieu via un exemple qui est presenté à la Figure 2.

Chaque modification qui concerne les materiaux utilisés à la construction de l' INVERTER photoélectronique, capable à fournir tension et fréquence variables au rotor entortillé d' une génératrice asynchrone pour des aérogénérateurs de tous les types, à mesure que le principe reste le même, peut être supposée qu' elle est comprise dans le cadre de l' invention proposée.

Les charactérestiques de l' invention proposée sont recapitulés en les revendications suivantes:

## Revendications

1. Construction d' un INVERTER photoéléctronique capable à fournir tension et fréquence variables au rotor entortillé d' une génératrice asynchrone pour des aérogénérateurs de tous les types, comprenant un système d' ignition de transistors de puissance, où les transistors reçoivent les signes d' ignition, provenus par des photopiles balayées periodiquement par une zone lumineuse, où la fréquence de balayage est telle qu' elle soit azoutée sur la fréquence mécanique de rotation du rotor et qu' elle nous donne la fréquence du reseau, après être multipliée par les nombre des pôles du rotor, et comprenant un transformateur à sortie variable, qui fournit les transistors de puissance via de contacts des spires intermediaires (9), par lesquels l' INVERTER est alimenté, après le redressement des tensions prises, assurant avec cette manière l' élimination des harmoniques.

2. Construction d' un INVERTER photoéléctronique capable à fournir tension et fréquence variables au rotor entortillé d' une génératrice asynchrone pour des aerogénérateurs de tous les types selon la revendication 1, characterisé en ce que la génératice asynchrone, à cause de la manière d' alimentation du rotor, fonctionne comme une génératrice synchrone "flexible" qui peut varier la fréquence de rotation du rotor, sans le danger de desynchronisation, où cette possibilite de variation permet que l' élice de l' aérogénérateur puisse poursuivre librement la vitesse du vent, à maniere que le rendement aérodynamique de l' élice soit toujours maximale, sans l' aide d' une boîte de vitesse mécanique compliquée, ayant une relation de transmission du mouvement stable.

3. Construction d' un INVERTER photoéléctronique capable à fournir tension et fréquence variables au rotor entortillé d' une génératrice asynchrone pour des aérogénérateurs de tous les types selon les revendications 1 à 2, charactérisé en ce que le moteur $M_1$ tourne le disque (1) qui a une ouverture de forme convenable, où d' une part il' y a les lampes d' éclairage (3) communes de commerce, qui fournissent la lumière qui passe via l' ouverture du disque tournant (1), ayant comme resultat une zone lumineuse tournante, de fréquence égale à celle du réseau, divisée par le nombre des paires des pôles du petit moteur synchrone $M_1$.

4. Construction d' un INVERTER photoéléctronique capable à fournir tension et fréquence variables au rotor entortillé d' une génératrice asynchrone pour des aérogénérateurs de tous les types selon les revendications 1 a 3, characterisé en ce que le disque (1), hors de la rotation primaire par le moteur M1, peut se mettre en une rotation complementaire de très petite fréquence, à l' aide d' un petit moteur $M_{2,}$ articulé d' une manière solide sur le même axe (4) qui entraîne le moteur M1, Fig. 1, où cette rotation complementaire se fait pour la création d' une ondulation de la tension (RMS) aux bornes d' une phase de stator, pendant la procédure de couplage avec le réseau, c' est à dire la zone lumineuse ne tourne pas avec une fréquence 50/(P/2) Hz, mais un peu plus petite où plus grande que 50/(P/2) Hz, et où cette rotation de $M_2$ s'arrête immediatement après le couplage.

5. Construction d' un INVERTER photoéléctronique capable à fournir tension et fréquence variables au rotor entortillé d' une génératrice asynchrone pour des aérogénérateurs de tous les types selon les revendications 1 à 4, characterisé en ce que la zone lumineuse tournante balaie la surface du deuxième disque (2), qui a sur sa surface des photopiles (8) avec une disposition convenable, et où ce deuxieme disque (2) est entrainé par le même axe (18) qui entraîne le rotor de la génératrice.

6. Construction d' un INVERTER photoéléctronique capable à fournir tension et fréquence variables au rotor entortillé d' une génératrice asynchrone pour des aérogénérateurs de tous les types selon les revendication 1 à 5, characterisé en ce que les amplificateurs operationnels (5) sont conduits en saturation par les signes de tension des photopiles du disque (2), où la reception des signes par les amplificateurs operationnels a lieu à l' aide des contacts mobiles (balais) qui sont toujours en contact avec les anneaux metalliques fins (7) auquels aboutissent les signes, et les signes amplifies provoquent l' ignition des MOSFETS de l' INVERTER.

7. Construction d' un INVERTER photoéléctronique capable à fournir tension et fréquence variables au rotor entortillé d'une génératrice asynchrone pour des aérogénérateurs de tous les types selon les revendications 1 à 6, characterisé en ce que le transformateur qui alimente l' INVERTER varie sa tension fournie au sécondaire, a l' aide d' une partie du noyau rotative (20), ou pendant cette rotation la résistance magnetique reste presque stable, grâce à la différence de l' aire de section des branches du noyau (21), (22), (23).

8. Construction d' un INVERTER photoéléctronique capble à fournir tension et fréquence variable au rotor entortillé d' une génératrice asynchrone pour des aerogénérateurs de tous les types selon les revendications 1 à 7, charactrisé en ce que l' INVERTER utilise trois MOSFETs en serie, à la place de chacun de l' INVERTER classique, où les trois MOSFETs sont alimentés par les trois spires intermediaires $0,24N_2$ , $0.693N_2$ , $N_2$ , où $N_2$ le nombre des spires du sécondaire assurant l' élimination des harmoniques.

9. Construction d' un INVERTER photoéléctronique capable à fournir tension et fréquence variable au rotor entortillé d' une génératrice asynchrone pour des aérogénérateurs de tous les types selon les revendications 1 à 8, characterisé en ce que la forme sinusoidale de flux magnétique fourni par le rotor, permet une simplification de la construction de la génératrice, c' est à dire le bobinage du stator peut être concentré, et l' entrefer peut être aussi le plus petit possible, reduisant les courants demandés pour l' excitation.

**10.** Construction d' un INVERTER photoéléctronique capable à fournir tension et fréquence variable au rotor entortillé d' une génératrice asynchrone pour des aérogénérateurs de tous les types selon les revendications 1 à 9, characterisé en ce que le couplage et le découplage de la génératrice avec le réseau ont lieu doucement, donnant le temps aux génératrices thermiques du réseau qu' elle soient adoptés sans le problème des perturbations.

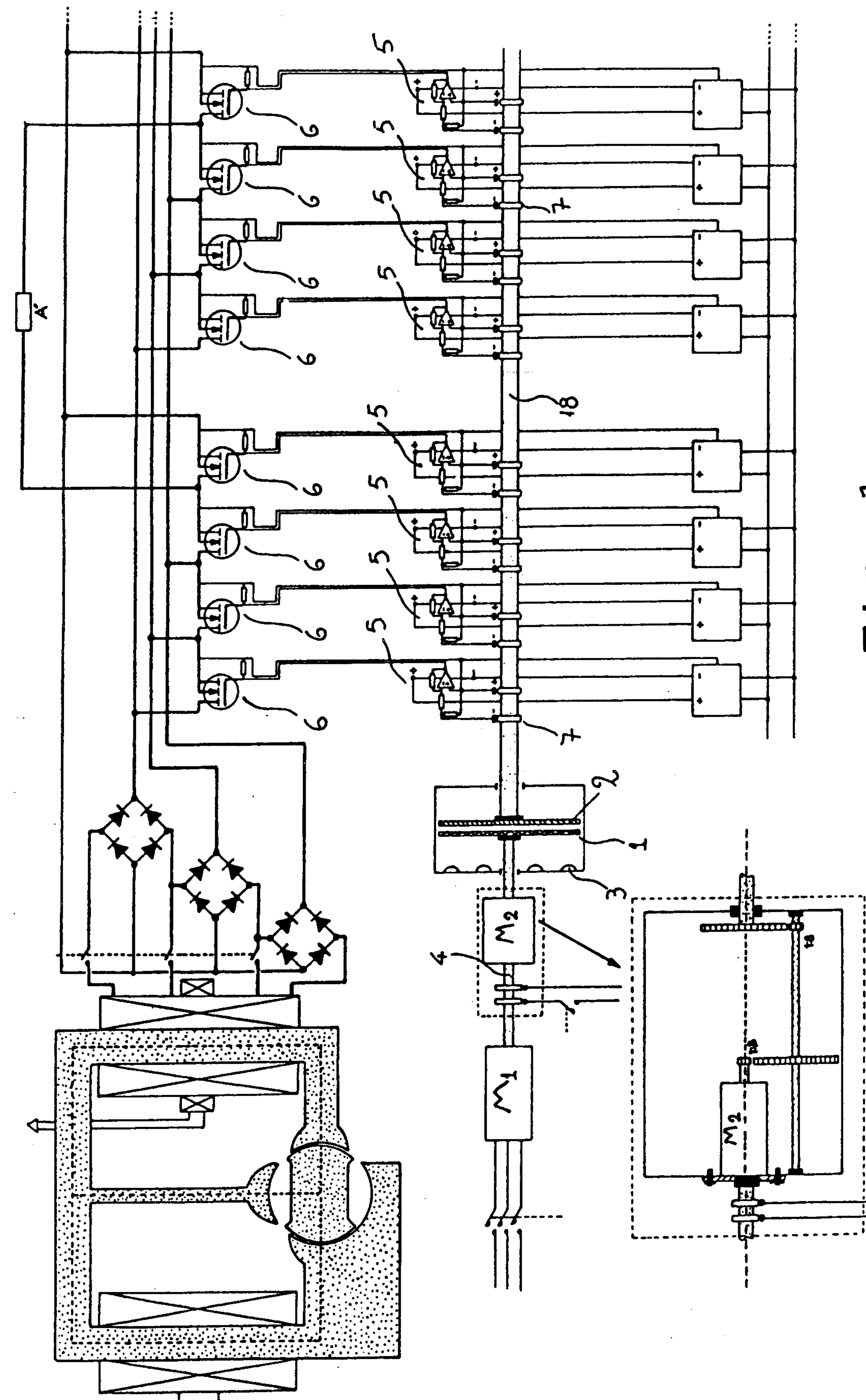


Fig. 1

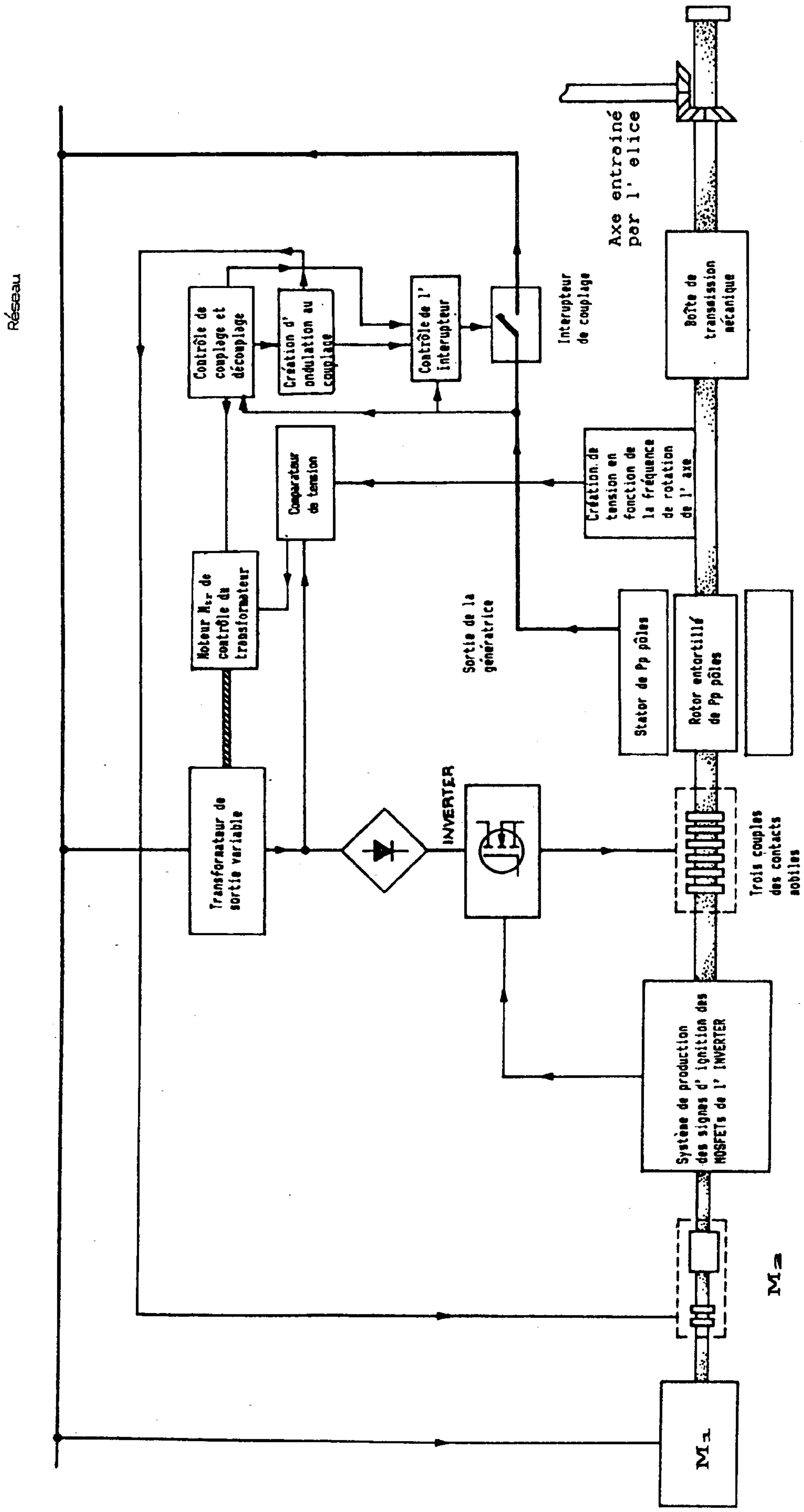
Réseau
Axe entrainé par l' elice
Boîte de transmission mécanique
Interupteur de couplage
Contrôle de couplage et découplage
Création d' ondulation au couplage
Contrôle de l' interrupteur
Comparateur de tension
Création de tension en fonction de la fréquence de rotation de l' axe
Moteur $M_{CT}$ de contrôle du transformateur
Sortie de la génératrice
Stator de Pp pôles
Rotor entortillé de Pp pôles
Transformateur de sortie variable
INVERTER
Trois couples des contacts mobiles
Système de production des signes d' ignition des MOSFETs de l' INVERTER
$M_2$
$M_1$

Fig. 2

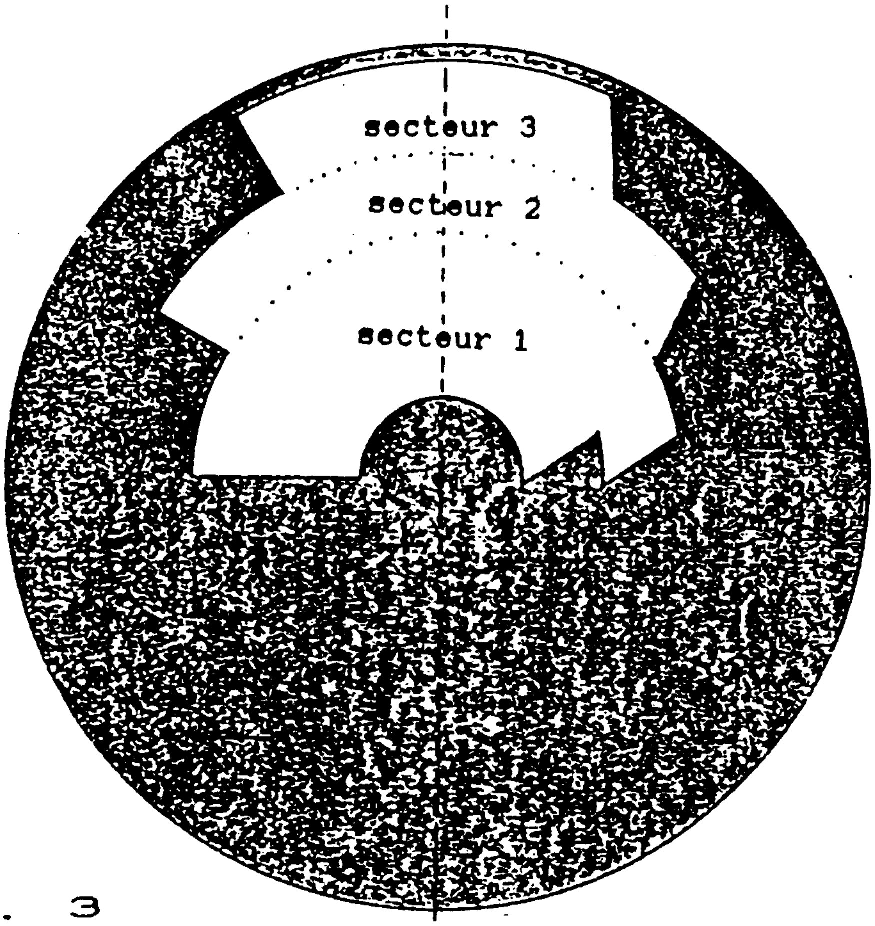


Fig. 3

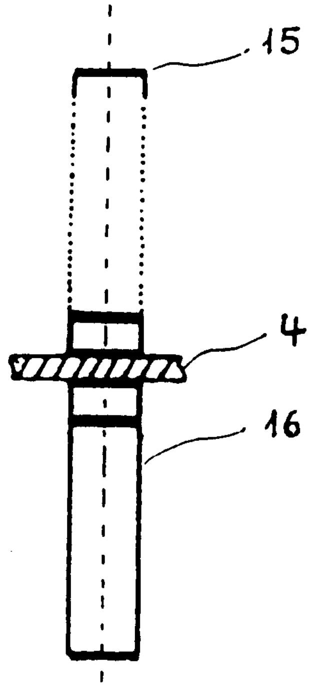


Fig. 4

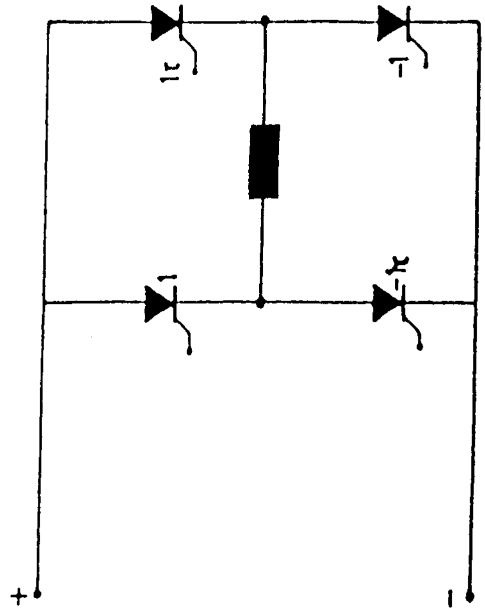

Fig. 5a

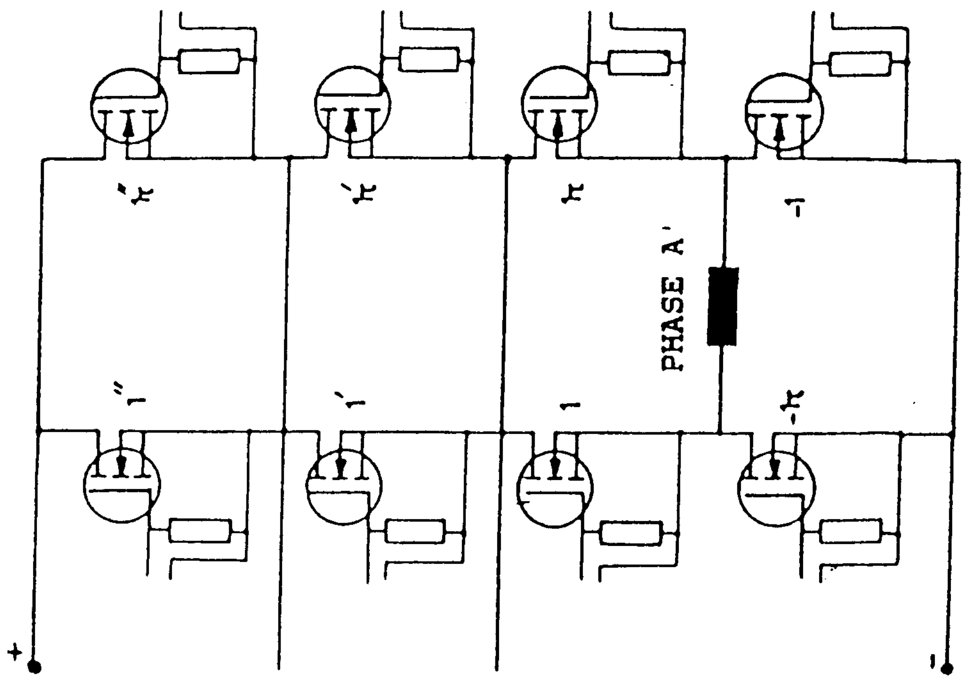


Fig. 5b

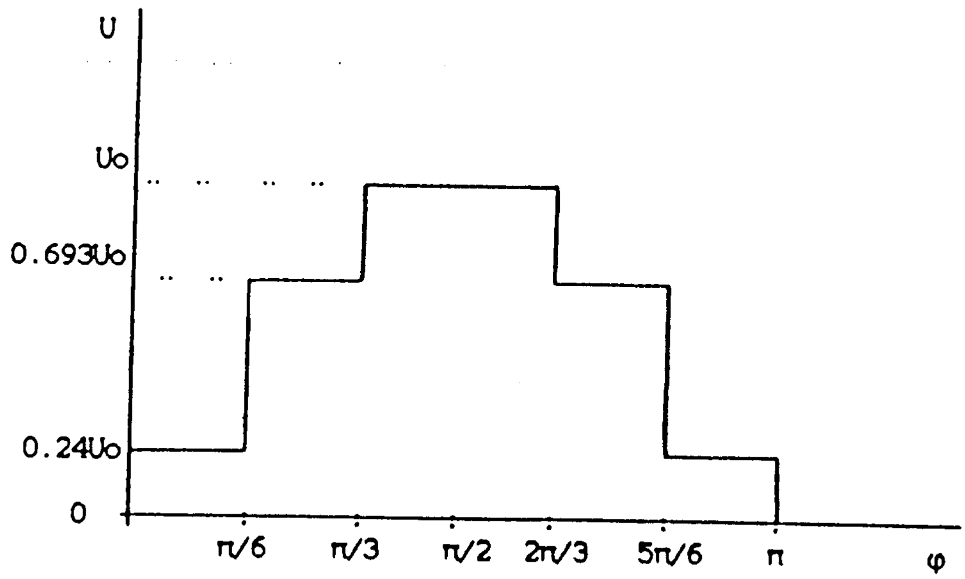


Fig. 5c

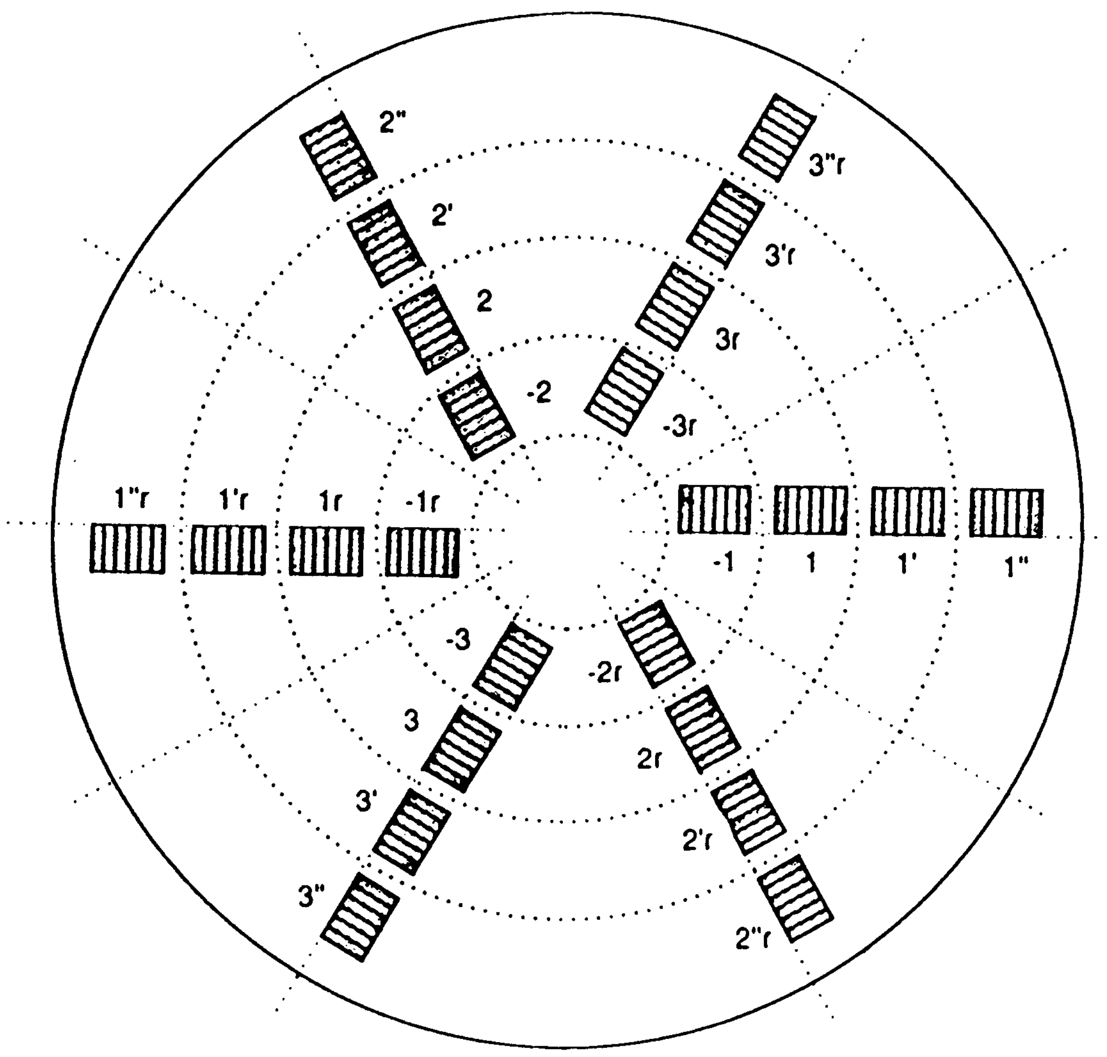


Fig. 6

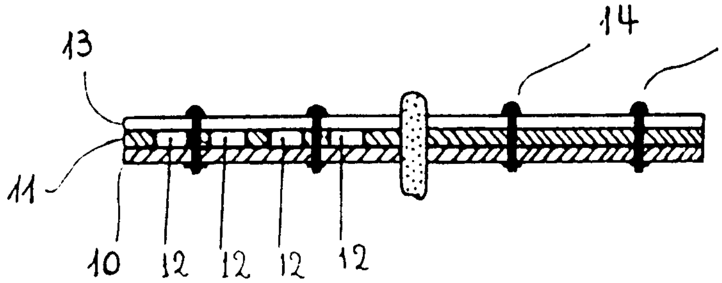

Fig. 7b

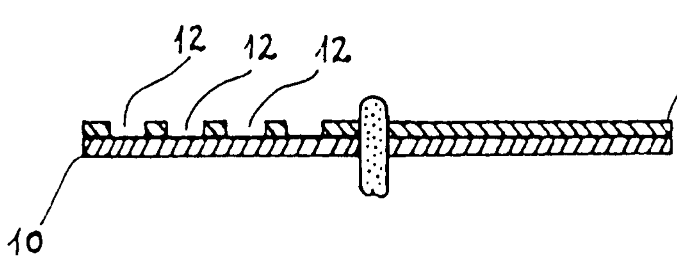

Fig. 7a

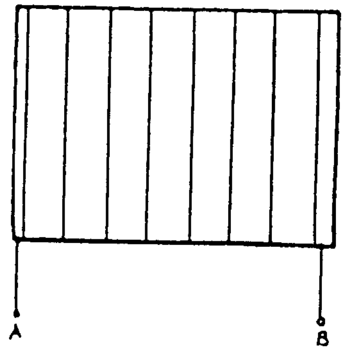

Fig. 8

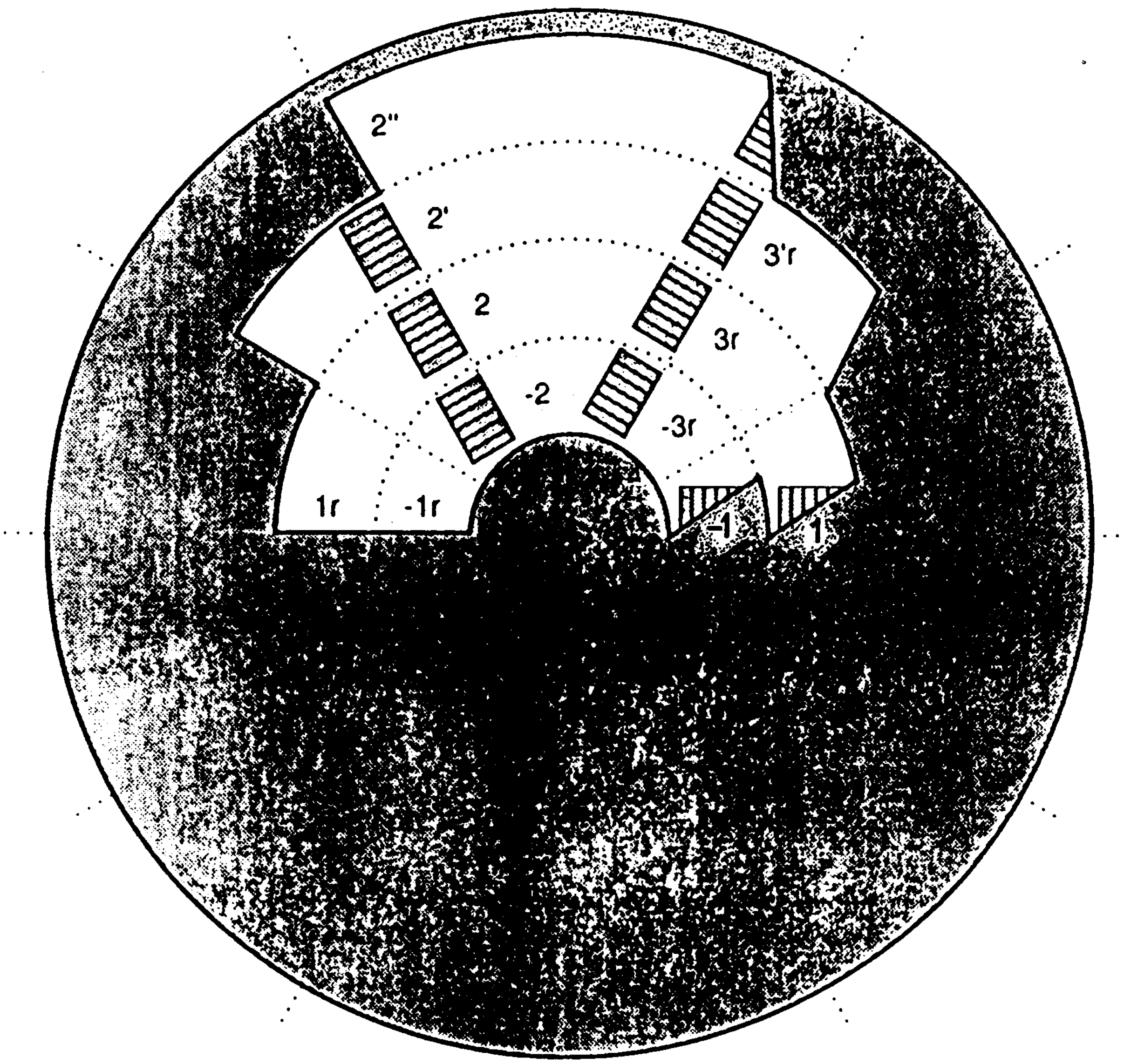


Fig. 9

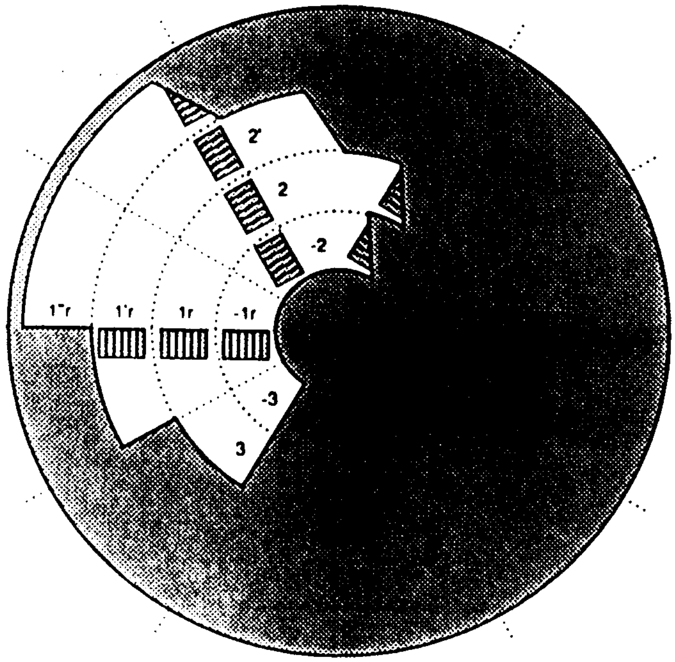


Fig. 10

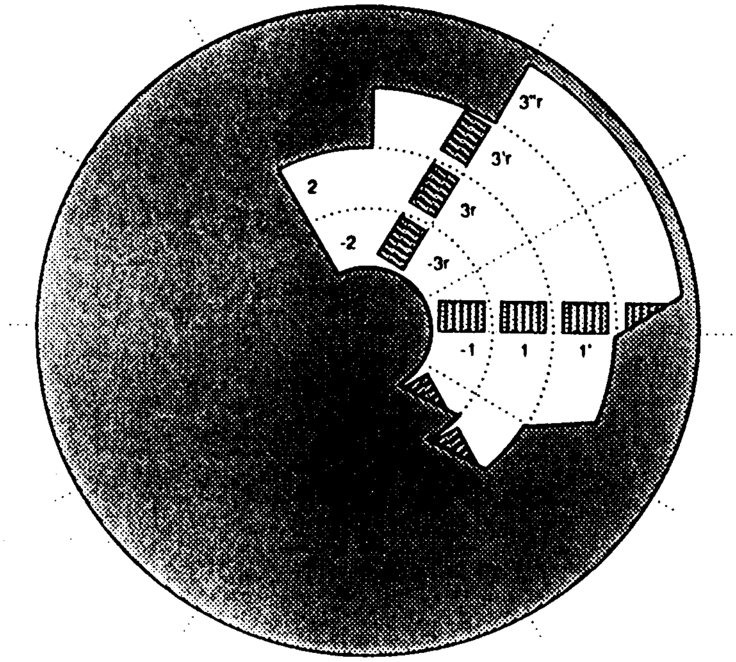


Fig. 11

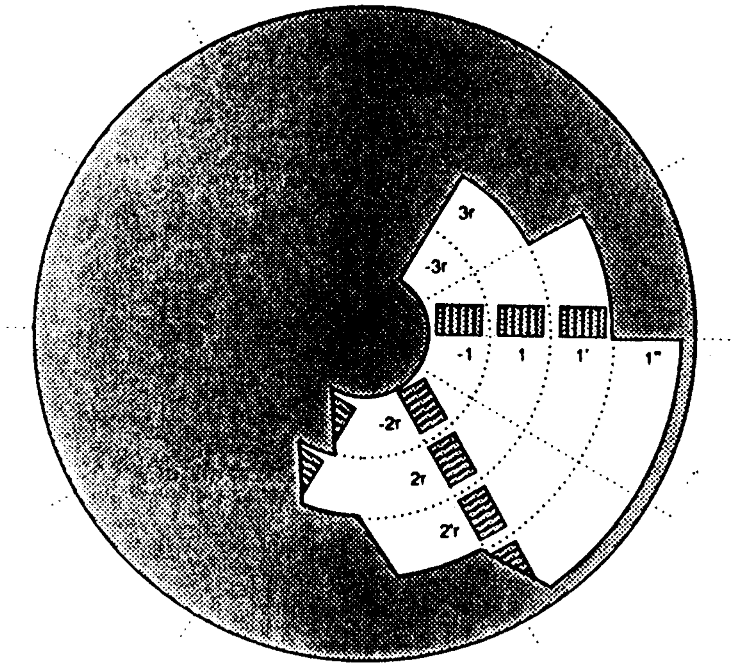


Fig. 12

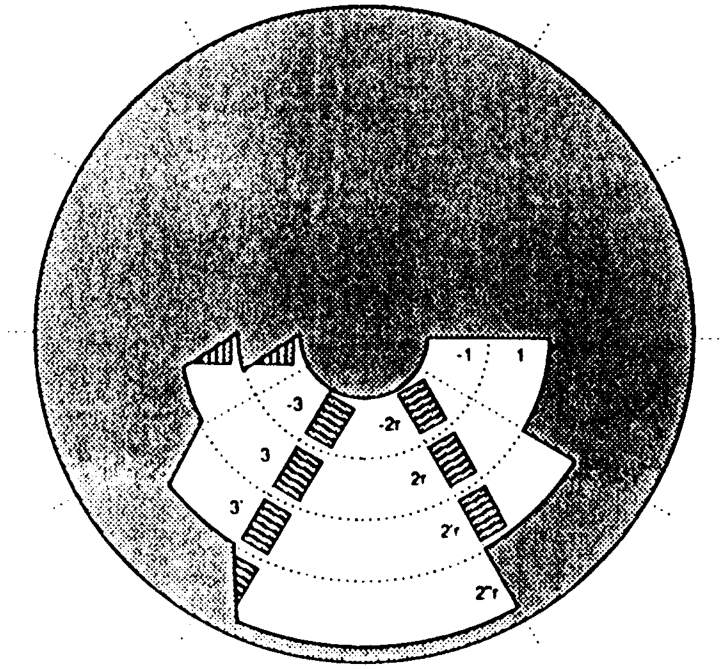


Fig. 13

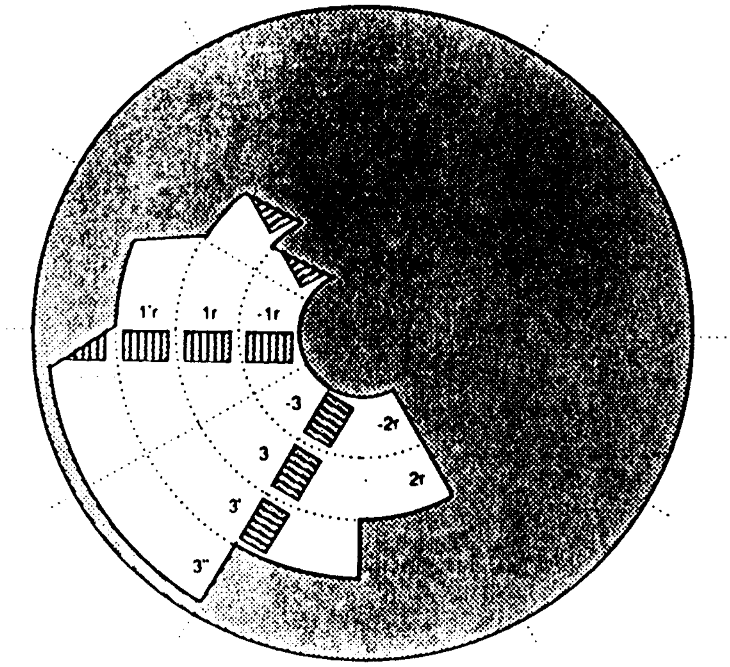


Fig. 14

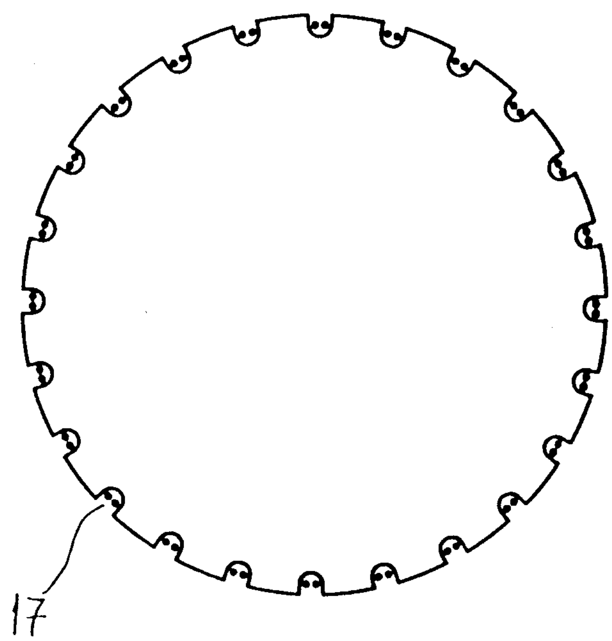


Fig. 15

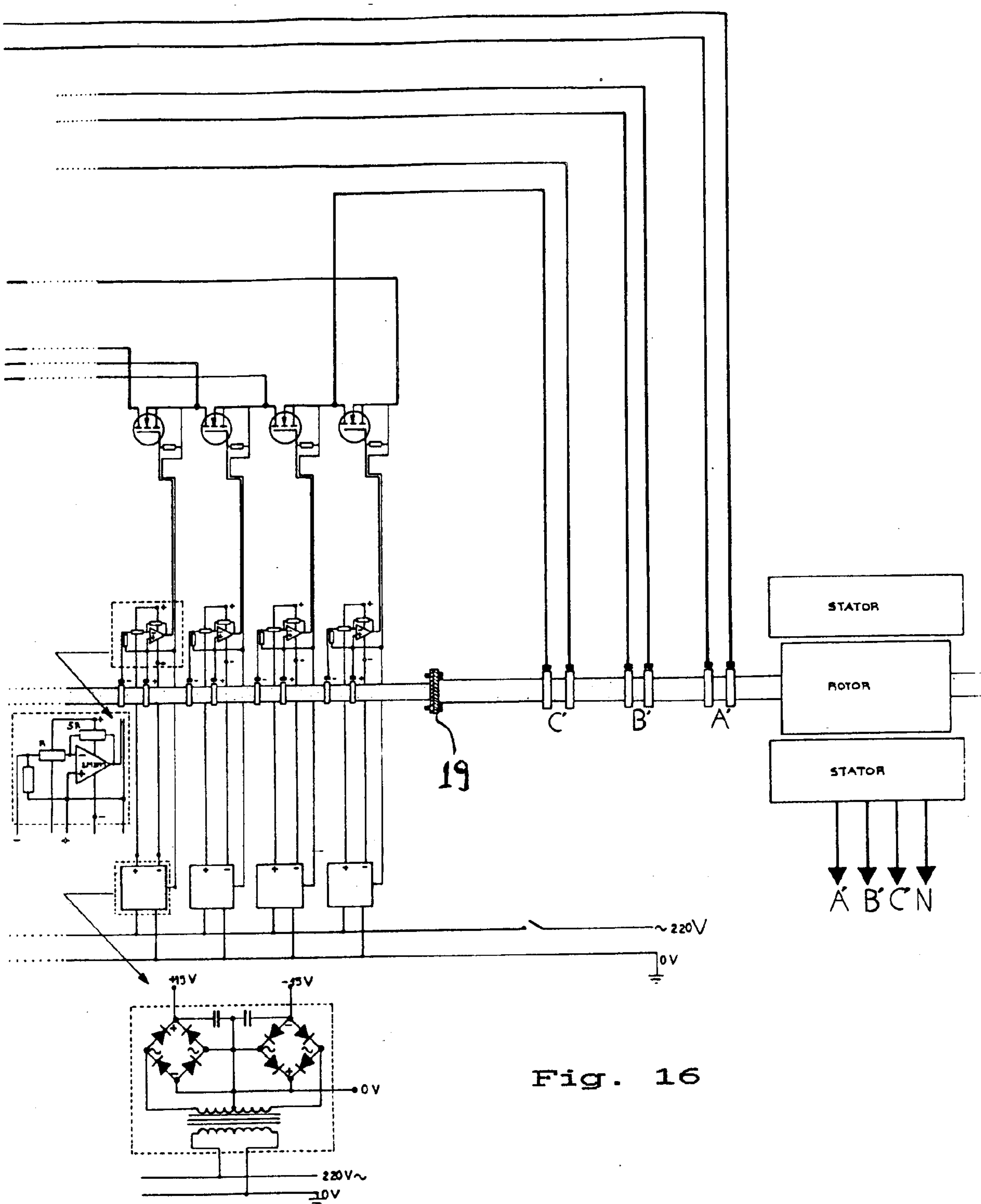


Fig. 16

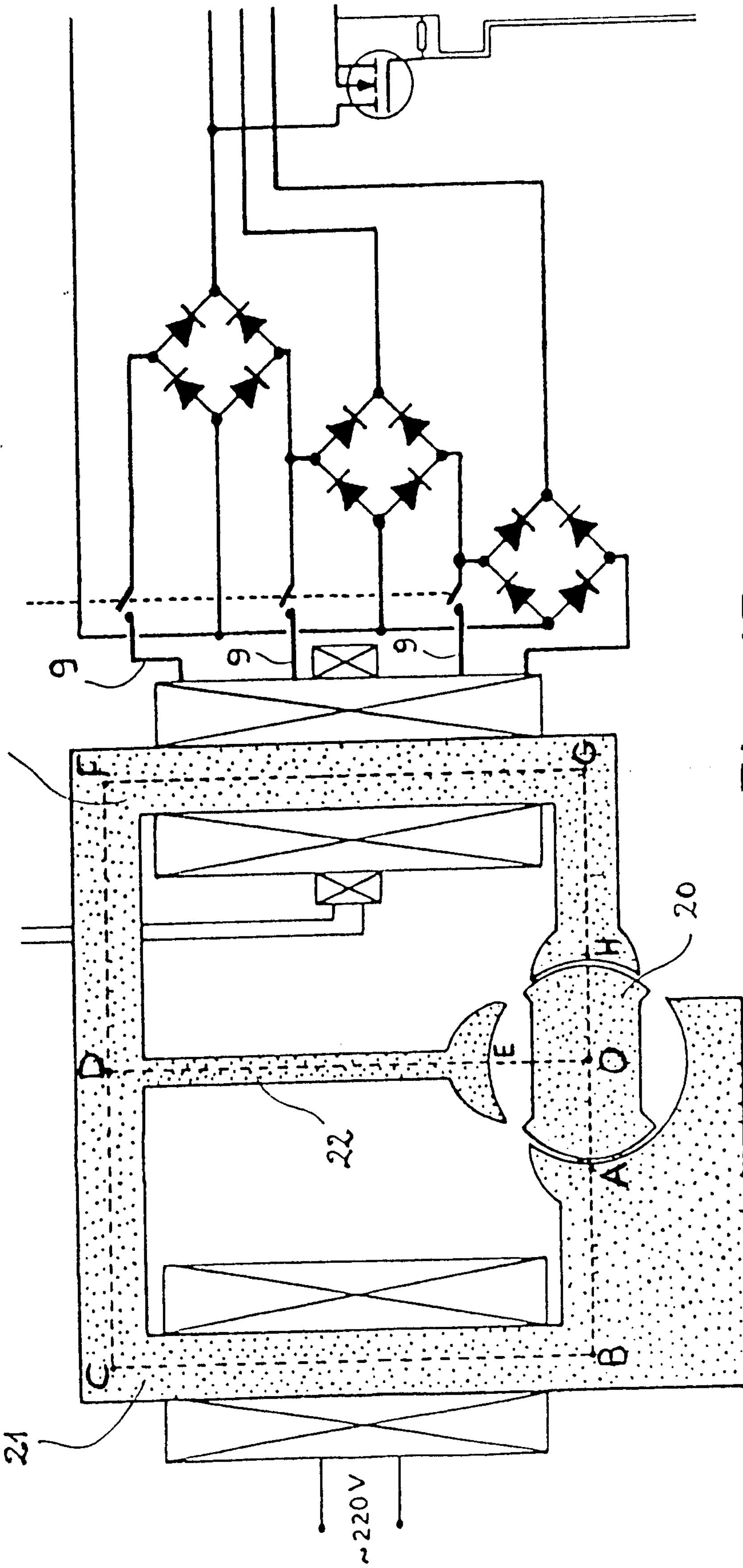


Fig. 17

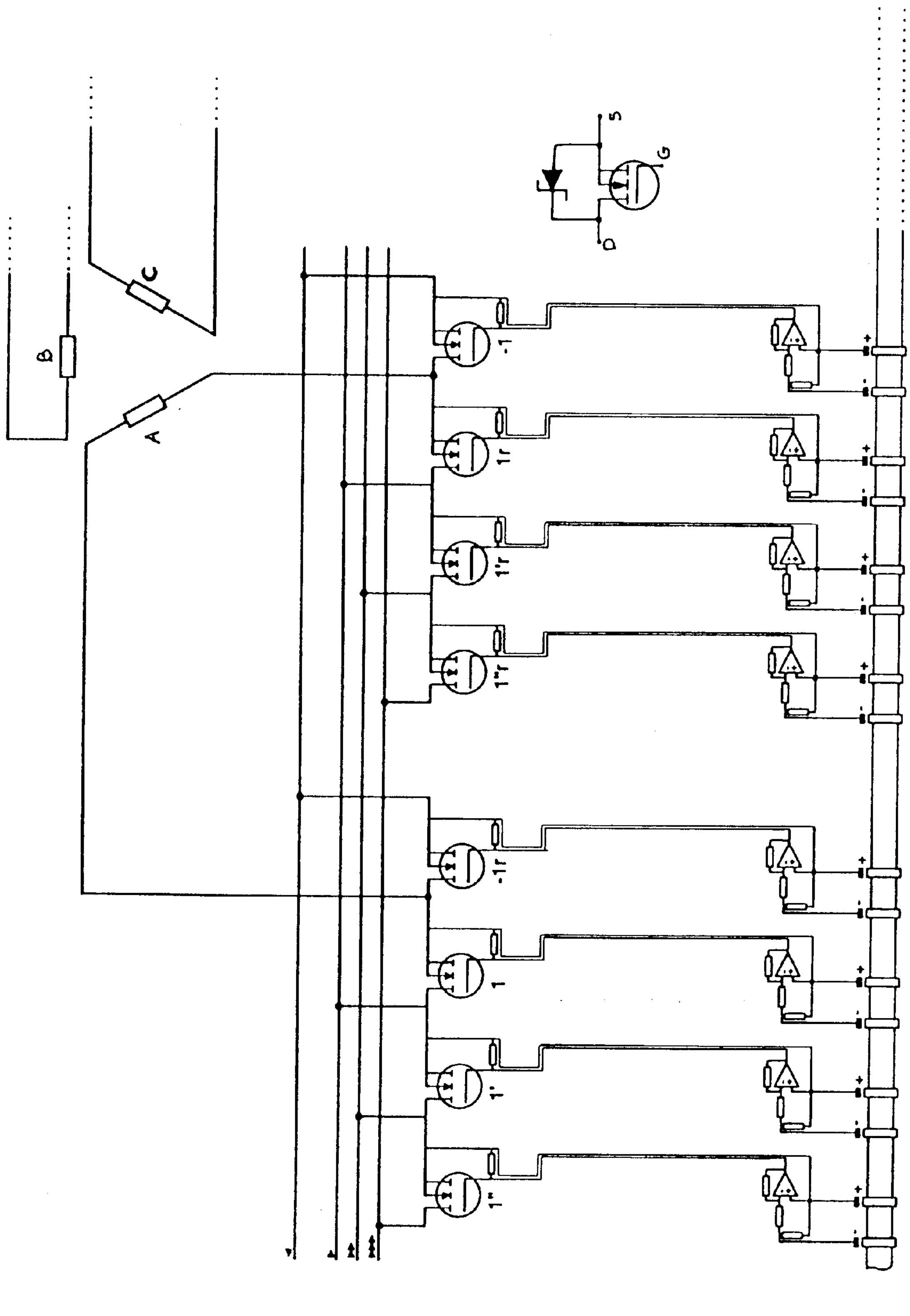


Fig. 18

Office européen des brevets

# RAPPORT DE RECHERCHE EUROPEENNE

Numero de la demande

EP 93 60 0013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | SIEMENS POWER ENGINEERING<br>vol. 6, no. 1, Janvier 1984,<br>pages 56 - 59<br>OTTO WARNEKE 'Use of a Double-Fed Induction Machine in the Growian Large Wind Energy Converter'<br>* le document en entier *<br>--- | 1 | H02P9/42 |
| A | US-A-4 994 684 (LAUW ET AL.)<br>19 Février 1991<br>* abrégé; figure 1 *<br>* colonne 10, ligne 66 - colonne 11, ligne 44 *<br>----- | 1 | |
| | | | **DOMAINES TECHNIQUES RECHERCHES (Int. Cl.5)** |
| | | | H02P |

Le présent rapport a été établi pour toutes les revendications

| Lieu de la recherche | Date d'achèvement de la recherche | Examinateur |
|---|---|---|
| LA HAYE | 05 OCTOBRE 1993 | BOURBON R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)